# EUROPEAN PATENT APPLICATION

(11) **EP 3 046 347 A1**
(43) Date of publication of application: **20.07.2016**
(21) Application number: 15190584.1
(22) Date of filing: 20.10.2015
(51) Int. Cl.: H04W 4/02

(54) **SELECTIVELY DEREGISTERING APPLICATIONS USING A PROXIMITY-BASED SERVICE (PROSE)**

(30) Priority: 15.01.2015 US 201562103682 P; 19.08.2015 US 201514829950
(71) Applicant: Acer Incorporated, Taipei County 221 (TW)
(72) Inventor: Chen, Pei-Jung, 221 Taipei City (TW)
(74) Representative: 2K Patentanwälte Blasberg Kewitz & Reichel

(57) **Abstract**

A mobile communication device including a wireless transceiver and a controller is provided. The wireless transceiver performs wireless transmission and reception to and from a service network including a ProSe function node. The controller transmits, to the ProSe function node via the wireless transceiver, a request for deregistering one or more applications without deregistering with the ProSe function node, and receives, from the ProSe function node via the wireless transceiver, a response including one or more deregistration results each indicating success or failure of a respective application deregistration.

## Description

### CROSS REFERENCE TO RELATED APPLICATIONS

This Application claims priority of U.S. Provisional Application No. 62/103,682, filed on January 15, 2015, the entirety of which is incorporated by reference herein. This Application claims priority of U.S. Application No. 14/829,950, filed on August 19, 2015, the entirety of which is incorporated by reference herein.

### BACKGROUND OF THE INVENTION

### Field of the Invention

The invention generally relates to application management of the Proximity-based Service (ProSe), and more particularly, to apparatuses and methods for selectively deregistering applications using the ProSe.

### Description of the Related Art

With growing demand for ubiquitous computing and networking, various wireless technologies have been developed, including Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced (LTE-A) technology, and Time- Division LTE (TD-LTE) technology, etc. By employing one of the wireless technologies, a mobile communication device (which may be referred to as User Equipment (UE)) may wirelessly connect to a service network for accessing the Internet or obtaining mobile services, including the Proximity-based Service (ProSe), anytime and anywhere. The ProSe represents an enormous recent social-technological trend.

Using LTE technology as an example, the ProSe is first introduced in Release 12 of the 3rd Generation Partnership Project (3GPP) specifications. The ProSe allows a UE to discover other UEs in its proximity region, and there are two kinds of ProSe service that a UE can use for proximity discovery: direct ProSe discovery and Evolved Packet Core (EPC) level ProSe discovery. If a UE wishes to use the EPC level ProSe discovery, it has to register with the ProSe function node of a service network and send a proximity request including information about the target UE(s) to the ProSe function node, so that the service network may apply its own Secure User Plane Location (SUPL) Location Platform (SLP) to trace the target UE's location and alert the requesting UE when the target UE enters its proximity region.

It should be noted that the EPC level ProSe discovery is application-based. That is, a UE must register each application before the EPC level ProSe discovery can function on the application. However, According to the 3GPP Technical Specifications (TS) 23.303 and 24.334, a UE cannot deregister one or some of the registered applications without deregistering itself from the EPC level ProSe discovery (which means all applications will be deregistered at the same time). Yet, there are situations where a UE may want to deregister just one or some applications and keep the other applications for the EPC level ProSe discovery. For example, a UE has registered Facebook and Twitter for the EPC level ProSe discovery, and now the UE's user feels Twitter is annoying and wants to stop the EPC level ProSe discovery on Twitter but keep the EPC level ProSe discovery on Facebook.

### BRIEF SUMMARY OF THE INVENTION

In order to solve the aforementioned problem, the invention proposes apparatuses and methods for selectively deregistering applications using the Proximity-based Service (ProSe). The methods enable the mobile communication device and the ProSe function node to handle deregistration of only one or some of the registered applications using the ProSe, without deregistering the mobile communication device with the ProSe function node.

In the first aspect of the invention, a mobile communication device is provided. The mobile communication device comprises a wireless transceiver and a controller. The wireless transceiver is configured to perform wireless transmission and reception to and from a service network comprising a ProSe function node. The controller is configured to transmit, to the ProSe function node via the wireless transceiver, a request for deregistering one or more applications without deregistering with the ProSe function node, and receive, from the ProSe function node via the wireless transceiver, a response comprising one or more deregistration results each indicating success or failure of a respective application deregistration.

In the second aspect of the invention, a method for a mobile communication device to selectively deregister one or more applications using a ProSe is provided. The method comprises the steps of: transmitting, to a ProSe function node of a service network, a request for deregistering one or more applications without deregistering with the ProSe function node; and receiving, from the ProSe function node, a response comprising one or more deregistration results each indicating success or failure of a respective application deregistration.

In the third aspect of the invention, a ProSe function node of a service network comprising an access node for wireless transmission and reception to and from a mobile communication device is provided. The ProSe function node comprises a communication device and a processor. The communication device is configured to provide a connection to a ProSe application server. The processor is configured to receive, from the mobile communication device via the access node, a request for deregistering one or more applications without deregistering the mobile communication device with the ProSe, communicate with the ProSe application server to deregister the applications in response to the request, and transmit, to the mobile communication device via the access node, a response comprising one or more deregistration results each indicating success or failure of a respective application deregistration.

In the fourth aspect of the invention, a method for a ProSe function node to selectively deregister one or more applications is provided. The method comprises the steps of: receiving, from the mobile communication device, a request for deregistering one or more applications without deregistering the mobile communication device with the ProSe; communicating with a ProSe application server to deregister the applications in response to the request; and transmitting, to the mobile communication device, a response comprising one or more deregistration results each indicating success or failure of a respective application deregistration.

Other aspects and features of the invention will become apparent to those with ordinary skill in the art upon review of the following descriptions of specific embodiments of the mobile communication devices, ProSe function nodes, and methods for selectively deregistering applications using the ProSe.

### BRIEF DESCRIPTION OF DRAWINGS

The invention can be more fully understood by reading the subsequent detailed description and examples with references made to the accompanying drawings, wherein:
Fig. 1 is a block diagram of a wireless communication environment according to an embodiment of the invention;
Fig. 2 is a block diagram illustrating the mobile communication device 110 according to an embodiment of the invention;
Fig. 3 is a block diagram illustrating a ProSe function node of the service network 120 according to an embodiment of the invention;
Fig. 4 is a message sequence chart illustrating application deregistration for the ProSe according to an embodiment of the invention;
Fig. 5 is a message sequence chart illustrating application deregistration for the ProSe according to another embodiment of the invention; and
Fig. 6 is a message sequence chart illustrating application deregistration for the ProSe according to yet another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof. The 3GPP specifications are used to teach the spirit of the invention, and the invention is not limited thereto.

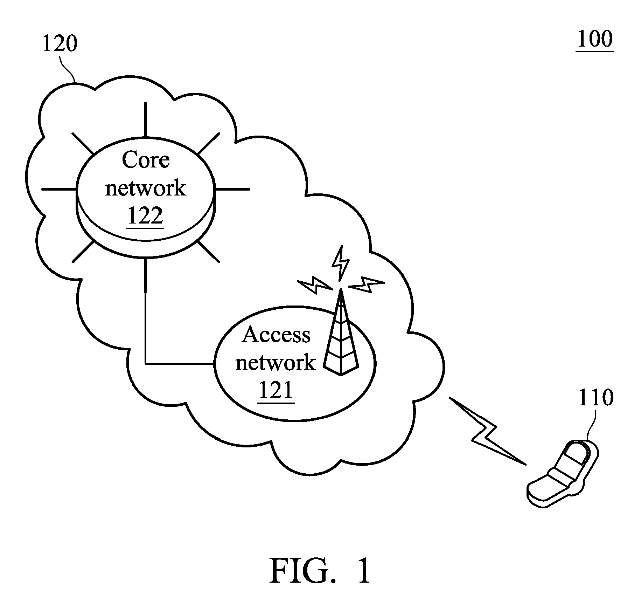

Fig. 1 is a block diagram of a wireless communication environment according to an embodiment of the invention. The wireless communication environment 100 comprises a mobile communication device 110 and a service network 120, wherein the mobile communication device 110 is wirelessly connected to the service network 120 for obtaining mobile services, including the Proximity-based Service (ProSe). The mobile communication device 110 may be a feature phone, a smartphone, a panel Personal Computer (PC), a laptop computer, or any computing device supporting the wireless technology utilized by the service network 120. The service network 120 may be an LTE-based network, such as an LTE network, LTE-A network, or TD-LTE network.

Specifically, the service network 120 comprises an access network 121 and a core network 122, wherein the access network 121 is responsible for processing radio signals, terminating radio protocols, and connecting the mobile communication device 110 with the core network 122, while the core network 122 is responsible for performing mobility management, network-side authentication, and interfaces with public/external networks (e.g., the Internet). Each of the access network 121 and the core network 122 may comprise one or more network nodes for carrying out said functions. For example, if the service network 120 is an LTE/LTE-A/TD-LTE network, the access network 121 may be an Evolved-UTRAN (E-UTRAN) which includes at least an evolved NB (eNB) (e.g., a home eNB, macro BS, or pico BS), and the core network 122 may be an Evolved Packet Core (EPC) which includes a Home Subscriber Server (HSS), Mobility Management Entity (MME), Serving Gateway (S-GW), Packet Data Network Gateway (PDN-GW or P-GW), Secure User Plane Location (SUPL) Location Platform (SLP), ProSe function node, and ProSe application server.

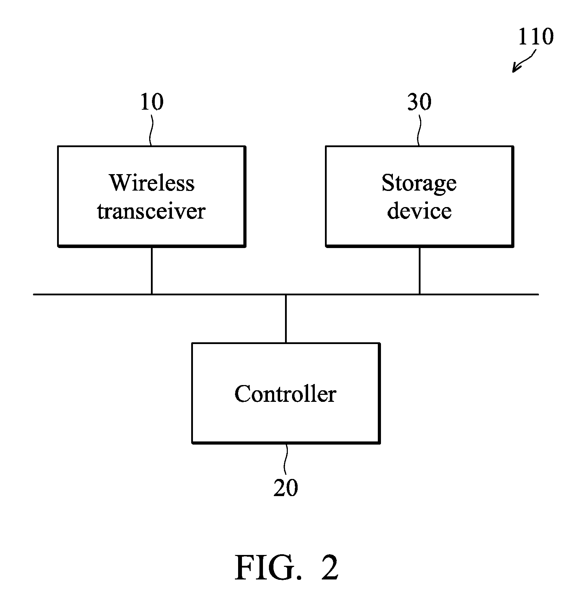

Fig. 2 is a block diagram illustrating the mobile communication device 110 according to an embodiment of the invention. The mobile communication device 110 comprises a wireless transceiver 10, a storage device 20, and a controller 30. The wireless transceiver 10 is responsible for providing the function of wireless transmission and reception to and from the service network 120. For example, the wireless transceiver 10 may comprise an antenna, a Radio Frequency (RF) device, and a baseband chip. The baseband chip performs baseband signal processing, including Analog-to-Digital Conversion (ADC)/Digital-to-Analog Conversion (DAC), gain adjusting, modulation/demodulation, encoding/decoding, and so on. The RF device receives RF wireless signals via the antenna, converts the received RF wireless signals to baseband signals, which are processed by the baseband chip, or receives baseband signals from the baseband chip and converts the received baseband signals to RF wireless signals, which are later transmitted via the antenna. The operative radio frequency may be 900MHz, 1800MHz, or 1900MHz utilized in the GPRS/GPRS/EDGE technology, or 900MHz, 1900MHz, or 2100MHz utilized in WCDMA technology, or 900MHz, 2100MHz, or 2.6GHz utilized in LTE/LTE-A/TD-LTE technology, or other radio frequencies depending on the wireless technology in use.

The storage device 20 may be a memory (e.g., Random Access Memory (RAM), Flash memory, or Non-Volatile Random Access Memory (NVRAM), etc.), a magnetic storage device (e.g., magnetic tape or hard disk), an optical storage device (e.g., Compact Disc Read-Only Memory (CD-ROM)), or any combination thereof for storing instructions and/or program codes of applications and/or communication protocols, and storing the value in use for the periodic update timers.

The controller 30 may be a general-purpose processor, a Micro-Control Unit (MCU), an application processor, a Digital Signal Processor (DSP), or the like, which provides the function of data processing and computing, and controls the operation of the wireless transceiver 10, and loads and executes a series of instructions and/or program codes from the storage device 20 to perform the method for selectively de-registering applications using the ProSe. Alternatively, the controller 30 may be an MCU of a baseband chip incorporated in the wireless transceiver 10.

Although not shown, the mobile communication device 110 may further comprise other functional units, such as a display device (e.g., a Liquid-Crystal Display (LCD), Light-Emitting Diode (LED) display, or Electronic Paper Display (EPD), etc.) for providing display function, an Input/Output (I/O) device (e.g., button, keyboard, mouse, touch pad, etc.), a power supply, and a Global Positioning System (GPS) unit for obtaining location information, etc., but the invention is not limited thereto.

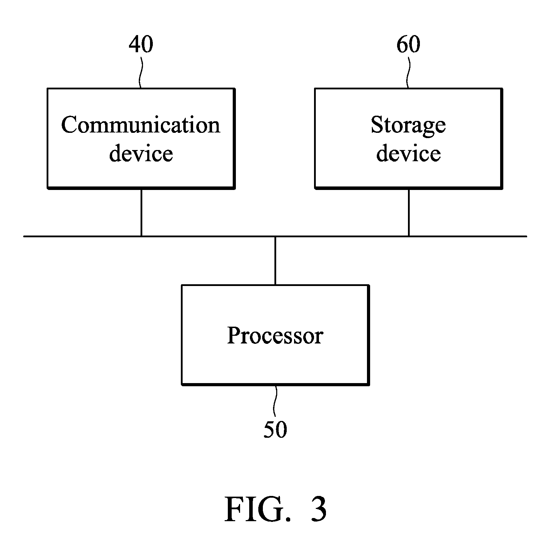

Fig. 3 is a block diagram illustrating a ProSe function node of the service network 120 according to an embodiment of the invention. The ProSe function node comprises a communication device 40, a controller 50, and a storage device 60. The communication device 40 is responsible for performing the functionality of wired and/or wireless communications with other network nodes (e.g., a ProSe application server, HSS, and SLP) of the service network 120 and the mobile communication device 110. For example, if the communication device 40 supports the function of wired communication, it may comprise a cable modem, an Asymmetric Digital Subscriber Line (ADSL) modem, a Fiber-Optic Modem (FOM), an Ethernet network interface, or another wired interface. If the communication device 40 supports the function of wireless communication, it may comprise an antenna, an RF device, and a baseband chip. The detailed description of the antenna, RF device, and baseband chip is similar to the wireless transceiver 10 described above, and thus, is not repeated here for brevity.

The controller 50 may be a general-purpose processor, an MCU, an application processor, a DSP, or the like, which provides the function of data processing and computing, and controls the operation of the communication device 40, and loads and executes a series of instructions and/or program codes from the storage device 60 to perform the method for selectively de-registering applications using the ProSe.

The storage device 60 may be a memory (e.g., RAM, Flash memory, or NVRAM, etc.), a magnetic storage device (e.g., magnetic tape or hard disk), an optical storage device (e.g., CD-ROM), or any combination thereof for storing instructions and/or program codes of communication protocols.

Although not shown, the ProSe function node may further comprise other functional units, such as an Input/Output (I/O) device (e.g., display device, button, keyboard, mouse, touch pad, touch screen, etc.), and a power supply, etc., and the invention is not limited thereto.

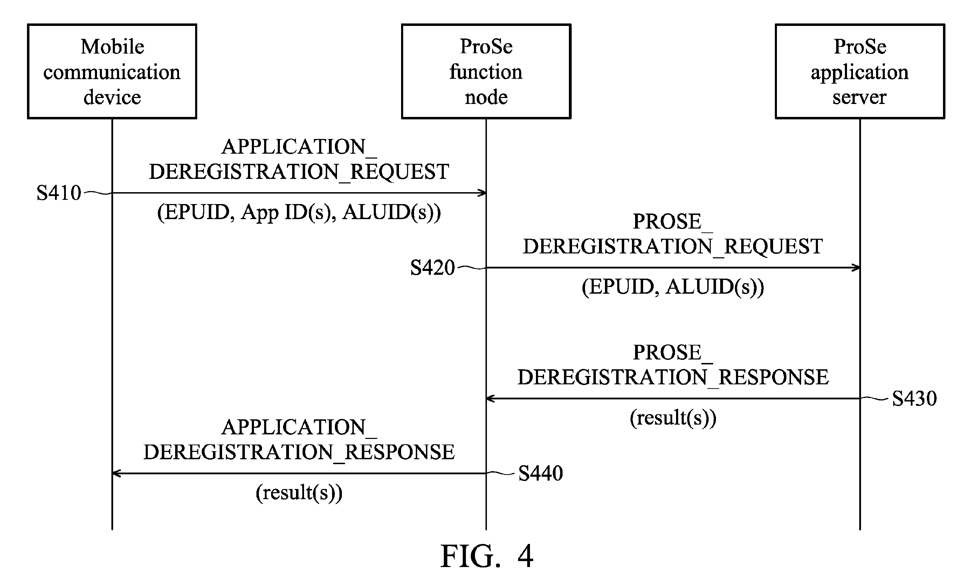

Fig. 4 is a message sequence chart illustrating application deregistration for the ProSe according to an embodiment of the invention. In this embodiment, a new procedure specifically defined for application deregistration is proposed. To begin, the mobile communication device transmits to the ProSe function node an APPLICATION_DEREGISTRATION_REQUEST message for requesting deregistration of one or more applications using the ProSe, wherein the APPLICATION_DEREGISTRATION_REQUEST message includes at least an EPC ProSe User ID (EPUID), and one or more application IDs and Application Layer User IDs (ALUIDs) (step S410).

Specifically, the EPUID is generated and provided by the ProSe function node when the mobile communication device was previously registered with the ProSe function node, which is used by the ProSe function node to identify the mobile communication device. The application ID(s) is used to identify the particular application(s) that the mobile communication device wishes to de-register. The ALUID(s) is used to identify the user in the context of the designated application.

Please note that the APPLICATION_DEREGISTRATION_REQUEST message is just used to de-register one or some of the applications using the ProSe, without de-registering the mobile communication device from the ProSe function node. That is, the applications other than the designated application(s) remain registered and have the ProSe functioning on them.

In response to the APPLICATION_DEREGISTRATION_REQUEST message, the ProSe function node transmits a PROSE_DEREGISTRATION_REQUEST message including the EPUID and ALUID(s) to the ProSe application server (step S420). When receiving the PROSE_DEREGISTRATION_REQUESTmessage, the ProSe application server removes the registered information of the application(s) corresponding to the application ID(s) and ALUID(s), and then replies to the ProSe function node with a PROSE_DEREGISTRATION_RESPONSE message including one or more deregistration results each indicating the success or failure of a respective application deregistration (step S430).

Subsequently, in response to the PROSE_DEREGISTRATION_RESPONSE message, the ProSe function node transmits an APPLICATION_DEREGISTRATION_RESPONSE message including the deregistration result(s) to the mobile communication device (step S440), and the method ends.

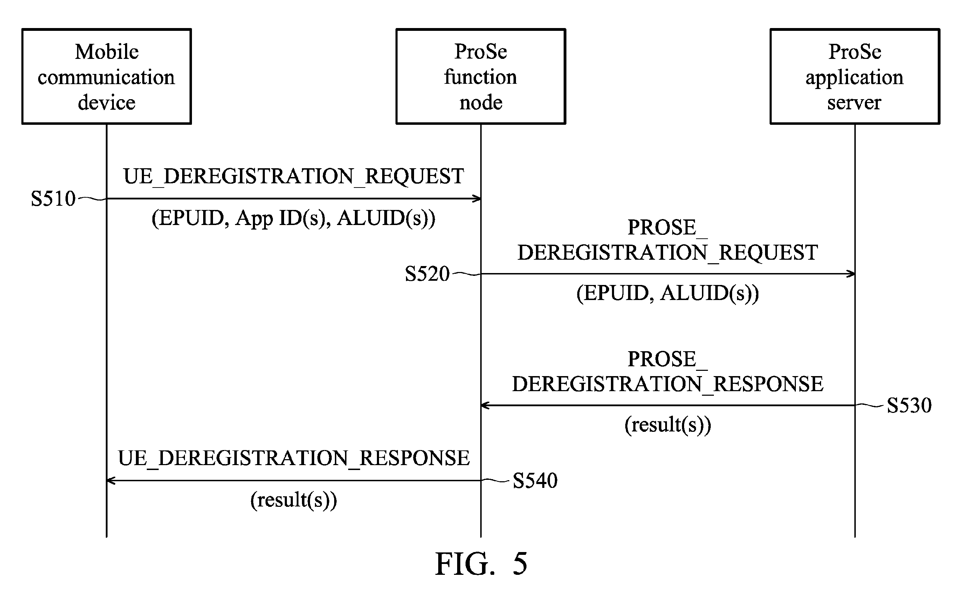

Fig. 5 is a message sequence chart illustrating application deregistration for the ProSe according to another embodiment of the invention. In this embodiment, the UE deregistration procedure specified by the 3GPP TS 23.303 and 24.334 is improved to allow application deregistration. To begin, the mobile communication device transmits to the ProSe function node a UE_DEREGISTRATION_REQUEST message for requesting deregistration of one or more applications using the ProSe, wherein the UE_DEREGISTRATION_REQUEST message includes at least an EPUID, one or more application IDs, and optionally one or more ALUIDs (step S510). The detailed description of the EPUID, application ID(s), and ALUID(s) is similar to the embodiment of Fig. 4, and thus, is omitted herein for brevity.

The UE_DEREGISTRATION_REQUEST message may further include other Information Elements (IEs), such as a transaction ID, and a PC3 EPC control protocol cause value. Reference may be made to the 3GPP TS 24.334 for detailed description of the other IEs.

Please note that, unlike the conventional UE_DEREGISTRATION_REQUEST message specified in the 3GPP TS 24.334, the UE_DEREGISTRATION_REQUEST message of the invention additionally includes the application ID(s) and the ALUID(s) for identifying the application(s) to be de-registered. For implementation, if there are two or more applications to be de-registered, the UE_DEREGISTRATION_REQUEST message may include multiple "UE-deregister-request" IEs, each of which further includes an application ID and an ALUID, or the UE_DEREGISTRATION_REQUEST message may include only one "UE-deregister-request" IE which further includes multiple application IDs and ALUIDs.

When receiving the UE_DEREGISTRATION_REQUEST message that additionally includes the application ID(s) and the ALUID(s) for identifying the application(s) to be de-registered, the ProSe function node knows that the UE_DEREGISTRATION_REQUEST message is used to request application deregistration instead of ProSe deregistration. In response, the ProSe function node communicates with the ProSe application server to perform the requested application deregistration.

Specifically, the ProSe function node transmits a PROSE_DEREGISTRATION_REQUESTmessage including the EPUID and ALUID(s) to the ProSe application server (step S520), and receives a PROSE_DEREGISTRATION_RESPONSE message including one or more deregistration results each indicating the success or failure of a respective application deregistration (step S530).

In response to the PROSE_DEREGISTRATION_RESPONSE message, the ProSe function node transmits a UE_DEREGISTRATION_RESPONSE message including the deregistration result(s) to the mobile communication device (step S540), and the method ends.

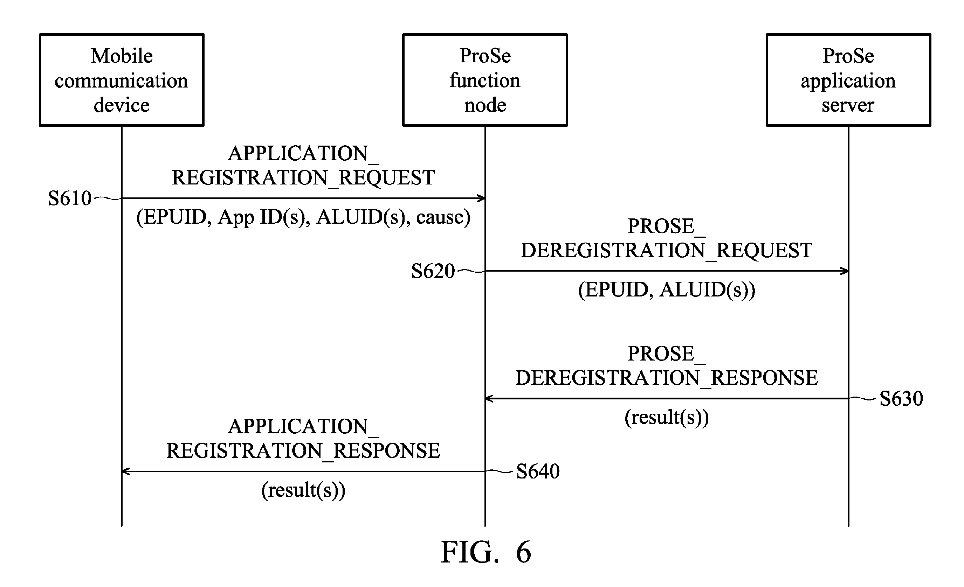

Fig. 6 is a message sequence chart illustrating application deregistration for the ProSe according to yet another embodiment of the invention. In this embodiment, the application registration procedure specified by the 3GPP TS 23.303 and 24.334 is improved to allow application deregistration. To begin, the mobile communication device transmits to the ProSe function node an APPLICATION_REGISTRATION_REQUEST message for requesting deregistration of one or more applications using the ProSe, wherein the APPLICATION_REGISTRATION_REQUEST message includes at least an EPUID, one or more application IDs and ALUIDs, and a cause value indicating that the request is for application deregistration (step S610). The detailed description of the EPUID, application ID(s), and ALUID(s) is similar to the embodiment of Fig. 4, and thus, is omitted herein for brevity.

The APPLICATION_REGISTRATION_REQUEST message may further include other Information Elements (IEs), such as a transaction ID, etc. Reference may be made to the 3GPP TS 24.334 for detailed description of the other IEs.

Please note that, unlike the conventional APPLICATION_REGISTRATION_REQUEST message specified in the 3GPP TS 24.334, the APPLICATION_REGISTRATION_REQUEST message of the invention additionally includes the "request-cause" IE (i.e., the aforementioned cause value) for indicating whether the request is for application registration or deregistration. For example, if the "request-cause" IE indicates that the request is for application registration, the ProSe function node should perform application registration for the designated applications. Otherwise, if the "request-cause" IE indicates that the request is for application deregistration, the ProSe function node should perform application deregistration for the designated applications.

For implementation, if there are two or more applications to be de-registered, the APPLICATION_REGISTRATION_REQUEST message may include multiple "application-register-request" IEs, each of which further includes a respective application ID and ALUID.

When receiving the APPLICATION_REGISTRATION_REQUEST message, the ProSe function node knows that the APPLICATION_REGISTRATION_REQUEST message is used to request application deregistration according to the cause value. In response, the ProSe function node communicates with the ProSe application server to perform the requested application deregistration.

Specifically, the ProSe function node transmits a PROSE_DEREGISTRATION_REQUEST message including the EPUID and ALUID(s) to the ProSe application server (step S620), and receives a PROSE_DEREGISTRATION_RESPONSE message including one or more deregistration results each indicating the success or failure of a respective application deregistration (step S630).

In response to the PROSE_DEREGISTRATION_RESPONSE message, the ProSe function node transmits an APPLICATION REGISTRATION RESPONSE message including the deregistration result(s) to the mobile communication device (step S640), and the method ends.

While the invention has been described by way of example and in terms of preferred embodiment, it is to be understood that the invention is not limited thereto. Those who are skilled in this technology can still make various alterations and modifications without departing from the scope and spirit of this invention. For example, the method for selectively de-registering applications using the ProSe may also be applied to mobile communication devices and ProSe function nodes in compliance with any evolutionary development of the LTE/LTE-A/TE-LTE technology. Therefore, the scope of the invention shall be defined and protected by the following claims and their equivalents.

## Claims

1. A mobile communication device (110), comprising:
a wireless transceiver (10), performing wireless transmission and reception to and from a service network comprising a Proximity-based Service, ProSe, function node; and
a controller (20), transmitting, to the ProSe function node via the wireless transceiver, a request for deregistering one or more applications without deregistering with the ProSe function node, and receiving, from the ProSe function node via the wireless transceiver, a response comprising one or more deregistration results each indicating success or failure of a respective application deregistration.

2. The mobile communication device of claim 1, wherein the request is an APPLICATION_DEREGISTRATION_REQUEST message comprising one or more application Identifications, IDs, and Application Layer User IDs, ALUIDs, and the response is an APPLICATION_DEREGISTRATION_RESPONSE message.

3. The mobile communication device of claim 1 or 2, wherein the request is a UE_DEREGISTRATION_REQUEST message comprising one or more application IDs, and the response is a UE_DEREGISTRATION_RESPONSE message.

4. The mobile communication device of any of the claims 1 to 3, wherein the request is an APPLICATION_REGISTRATION_REQUEST message comprising a cause indicating that the request is for deregistering the applications, and the response is an APPLICATION_REGISTRATION_RESPONSE message.

5. A method for a mobile communication device to selectively deregister one or more applications using a Proximity-based Service, ProSe, comprising:
transmitting, to a ProSe function node of a service network, a request for deregistering one or more applications without deregistering with the ProSe function node; and
receiving, from the ProSe function node, a response comprising one or more deregistration results each indicating success or failure of a respective application deregistration.

6. A Proximity-based Service, ProSe, function node of a service network comprising an access node for wireless transmission and reception to and from a mobile communication device, comprising:
a communication device, providing a connection to a ProSe application server; and
a processor, receiving, from the mobile communication device via the access node, a request for deregistering one or more applications without deregistering the mobile communication device with the ProSe, communicating with the ProSe application server to deregister the applications in response to the request, and transmitting, to the mobile communication device via the access node, a response comprising one or more deregistration results each indicating success or failure of a respective application deregistration.

7. The ProSe function node of claim 6, wherein the request is an APPLICATION_DEREGISTRATION_REQUEST message comprising one or more application Identifications, IDs, and Application Layer User IDs, ALUIDs, and the response is an APPLICATION_DEREGISTRATION_RESPONSE message.

8. The ProSe function node of claim 6 or 7, wherein the request is a UE_DEREGISTRATION_REQUEST message comprising one or more application IDs, and the response is an UE_DEREGISTRATION_RESPONSE message.

9. The ProSe function node of any of the claims 6 to 9, wherein the request is an APPLICATION_REGISTRATION_REQUEST message comprising a cause indicating that the request is for deregistering the applications, and the response is an APPLICATION REGISTRATION RESPONSE message.

10. The ProSe function node of any of the claims 6 to 9, wherein the communication with the ProSe application server comprises: transmitting a PROSE_DEREGISTRATION_REQUEST message comprising EPUID, ALUID(s) to the ProSe application server to deregister the applications for the mobile communication device, and receiving a PROSE_DEREGISTRATION_RESPONSE message comprising the deregistration results from the ProSe application server.

11. A method for a Proximity-based Service, ProSe, function node to selectively deregister one or more applications, comprising:
receiving, from the mobile communication device, a request for deregistering one or more applications without deregistering the mobile communication device with the ProSe;
communicating with a ProSe application server to deregister the applications in response to the request; and
transmitting, to the mobile communication device, a response comprising one or more deregistration results each indicating success or failure of a respective application deregistration.

12. The method of claim 5 or 11, wherein the request is an APPLICATION_DEREGISTRATION_REQUEST message comprising one or more application Identifications, IDs, and Application Layer User IDs, ALUIDs, and the response is an APPLICATION_DEREGISTRATION_RESPONSE message.

13. The method of claim 5, 11 or 12, wherein the request is a UE_DEREGISTRATION_REQUEST message comprising one or more application IDs, and the response is an UE_DEREGISTRATION_RESPONSE message.

14. The method of claim 5, 11, 12 or 13, wherein the request is an APPLICATION_REGISTRATION_REQUEST message comprising a cause indicating that the request is for deregistering the applications, and the response is an APPLICATION REGISTRATION RESPONSE message.

15. The method of claim 5, 11, 12, 13 or 14, wherein the communication with the ProSe application server comprises:
transmitting a PROSE_DEREGISTRATION_REQUEST message to the ProSe application server to deregister the applications for the mobile communication device; and
receiving a PROSE_DEREGISTRATION_RESPONSE message comprising the deregistration results from the ProSe application server.
